# FASCICULE DE BREVET EUROPEEN

(11) **EP 4 242 922 B1**
(45) Date de publication et mention de la délivrance du brevet: **03.09.2025**
(21) Numéro de dépôt: 23157108.4
(22) Date de dépôt: 16.02.2023
(51) Int. Cl.: G06F 21/14, G06N 3/047, G06N 3/082, G06N 3/088, G06N 3/0455, G06N 3/0464, G06N 3/0895, G06N 3/094

(54) **PROCÉDÉ D'UTILISATION SÉCURISÉE D'UN PREMIER RÉSEAU DE NEURONES SUR UNE DONNÉE D'ENTRÉE**
VERFAHREN ZUR SICHEREN VERWENDUNG EINES ERSTEN NEURONALEN NETZES AUF EINE EINGABEINFORMATION
METHOD FOR SECURELY USING A FIRST NEURAL NETWORK ON AN INPUT DATA

(30) Priorité: 09.03.2022 FR 2202041
(43) Date de publication de la demande: 13.09.2023
(73) Titulaire: IDEMIA Public Security France, 92400 Courbevoie (FR)
(72) Inventeur: CHABANNE, Hervé, 92400 COURBEVOIE (FR); DESPIEGEL, Vincent, 92400 COURBEVOIE (FR); GENTRIC, Stephane, 92400 COURBEVOIE (FR); GUIGA, Linda, 92400 COURBEVOIE (FR)
(74) Mandataire: IPS

(56) Documents cités:
- HERV\'E CHABANNE ET AL: "A Protection against the Extraction of Neural Network Models", ARXIV.ORG, CORNELL UNIVERSITY LIBRARY, 201 OLIN LIBRARY CORNELL UNIVERSITY ITHACA, NY 14853, 31 July 2020 (2020-07-31), XP081726168

## Description

### DOMAINE TECHNIQUE GENERAL

La présente invention concerne le domaine de l'intelligence artificielle, et en particulier un procédé d'utilisation sécurisée d'un premier réseau de neurones sur une donnée d'entrée.

### ETAT DE L'ART

Les réseaux de neurones (ou NN, pour neural network) sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues. Plus précisément, la valeur de poids et paramètres du NN est progressivement modifiée jusqu'à ce que ce dernier soit capable de mettre en œuvre la tâche visée.

Des progrès significatifs ont été réalisés les dernières années, aussi bien sur les architectures des réseaux de neurones, que sur les techniques d'apprentissage (en particulier en apprentissage profond) ou encore sur les bases d'apprentissage (taille et qualité de ces dernières), et des tâches auparavant considérées comme impossibles sont aujourd'hui accomplies par des réseaux de neurones avec une excellente fiabilité.

Un défi rencontré par les réseaux de neurones est l'existence des « perturbations antagonistes » (ou « attaques adversariales », ce qui est la traduction littérale de l'anglais adversarial attacks), c'est-à-dire des changements imperceptibles qui lorsque appliqués sur une entrée du réseau de neurone changent significativement la sortie. On voit par exemple dans le document *A Simple Explanation for the Existence of Adversarial Examples with Small Hamming Distance par Adi Shamir, Itay Safran, Eyal Ronen, et Orr Dunkelman, https:*//*arxiv.org*/*pdf*/*1901.10861v1.pdf* comment une perturbation antagoniste appliquée sur une image de chat peut conduire à celle-ci classifiée à tort comme une image de guacamole.

L'idée est de constater que dans un réseau de neurones, on trouve une alternance de couches linéaires et couches non-linéaires mettant en œuvre une fonction d'activation telle que ReLU. Cette non-linéarité entraîne des « points critiques » de saut du gradient, et on peut ainsi géométriquement définir pour chaque neurone un hyperplan de l'espace d'entrée du réseau tel que la sortie est à un point critique. Les hyperplans de la deuxième couche sont « pliés » par les hyperplans de la première couche et, ainsi de suite.

Dès lors qu'un attaquant a réussi à identifier le découpage en hyperplans évoqué avant, il peut déterminer un vecteur permettant, à partir d'un point de l'espace d'entrée, de franchir un hyperplan et donc de modifier la sortie.

On comprend donc qu'il est essentiel de parvenir à sécuriser les réseaux de neurones.

Une première piste est d'augmenter la taille, le nombre de couches et le nombre de paramètres du réseau de sorte à compliquer la tâche de l'attaquant. Si cela fonctionne, d'une part cela ne fait que ralentir l'attaquant et surtout cela dégrade les performances car le réseau de neurones est alors inutilement lourd et difficile à apprendre.

Une deuxième piste est de limiter le nombre d'entrées pouvant être soumises au réseau de neurones, ou du moins de détecter les séquences suspectes d'entrées. Cela n'est toutefois pas toujours applicables, puisque l'attaquant peut légalement avoir accès au réseau de neurones en ayant par exemple payé un accès sans restriction.

La Demanderesse a par ailleurs proposé dans la demande FR3110268 une technique consistant à insérer dans le réseau à sécuriser au moins un réseau de neurones à convolution approximant la fonction identité, dit CNN Identité. Cette technique est également explicitée dans l'article "A Protection against the Extraction of Neural Network Models", de Hervé Chabanne et al. (2020-07-31).

Cette technique s'avère efficace contre les perturbations antagonistes mais elle a été principalement développée pour lutter contre les techniques de « reverse engineering » permettant à un attaquant d'extraire les paramètres et le modèle de n'importe quel réseau de neurones dès lors qu'on est capable de lui soumettre suffisamment de requêtes bien choisies, ou d'observer grâce à un canal auxiliaire (type électromagnétisme) des informations supplémentaires, de sorte qu'on pourrait encore améliorer la situation en ce qui concerne spécifiquement la problématique des perturbations antagonistes.

### PRESENTATION DE L'INVENTION

Selon un premier aspect, la présente invention concerne un procédé d'utilisation sécurisée d'un premier réseau de neurones sur une donnée d'entrée selon la revendication 1.

Selon un deuxième et un troisième aspect, l'invention concerne un produit programme d'ordinateur comprenant des instructions de code pour l'exécution d'un procédé selon le premier aspect d'utilisation sécurisée d'un premier réseau de neurones sur une donnée d'entrée ; et un moyen de stockage lisible par un équipement informatique sur lequel un produit programme d'ordinateur comprend des instructions de code pour l'exécution d'un procédé selon le premier aspect d'utilisation sécurisée d'un premier réseau de neurones sur une donnée d'entrée.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre du procédé d'utilisation sécurisée d'un premier réseau de neurones sur une donnée d'entrée selon l'invention ;
- la figure 2 représente schématiquement les étapes d'un mode de réalisation du procédé d'utilisation sécurisée d'un premier réseau de neurones sur une donnée d'entrée selon l'invention ;

### DESCRIPTION DETAILLEE

### Architecture

La présente invention propose un procédé d'utilisation sécurisée d'un premier réseau de neurones (1^{e} NN) impliquant la génération d'un deuxième réseau de neurones (2^{e} NN).

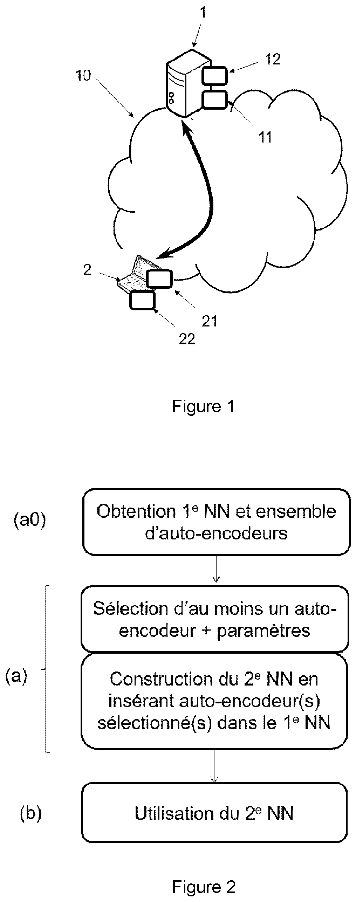

Ce procédé est mis en œuvre au sein d'une architecture telle que représentée par la Figure 1, grâce à au moins un serveur 1 et un terminal 2. Le serveur 1 est l'équipement d'apprentissage (mettant en œuvre un apprentissage du 1^{e} NN et/ou d'un auto-encodeur) et le terminal 2 est un équipement d'utilisation (mettant en œuvre ledit procédé d'utilisation sécurisé). Ledit procédé d'utilisation est mis en œuvre sur une donnée d'entrée, et est par exemple une classification de la donnée d'entrée parmi plusieurs classes si c'est un NN de classification (mais cette tâche n'est pas nécessairement une classification même si c'est la plus classique).

On ne sera limité à aucun type de NN en particulier, même si typiquement il s'agit d'une alternance de couches linéaires et de couches non-linéaires à fonction d'activation, notamment ReLU (Rectified Linear Unit, i.e. Unité de Rectification Linéaire) qui est égale à *σ(x) = max(0, x).* On comprend donc que chaque hyperplan correspond à l'ensemble des points de l'espace d'entrée tels qu'une sortie d'une couche linéaire est égale à zéro.

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple un disque dur.

Le serveur 1 stocke une base de données d'apprentissage, i.e. un ensemble de données pour lesquelles on connait déjà la sortie associée, par exemple déjà classifiées (par opposition aux données dites d'entrée que l'on cherche justement à traiter). Il peut s'agir d'une base d'apprentissage à haute valeur commerciale qu'on cherche à garder secrète.

On comprendra qu'il reste possible que les équipements 1 et 2 puissent être le même équipement, voire la base d'apprentissage être une base publique.

A noter que le présent procédé n'est pas limité à un type de NN et donc pas à une nature particulière de données, les données d'entrée ou d'apprentissage peuvent être représentatives d'images, de sons, etc.

Dans un mode de réalisation préféré il s'agit de données personnelles, et encore plus préférentiellement des données biométriques, les données d'entrée ou d'apprentissage étant typiquement représentatives d'images voire directement des images de traits biométriques (visages, empreintes digitales, iris, etc.), ou directement des données prétraitées issues des traits biométriques (par exemple la position de minuties dans le cas d'empreintes digitales).

Le 1^{e} NN peut par exemple être un CNN particulièrement adapté pour traiter des images de traits biométriques.

### Principe

La présente invention propose à nouveau de complexifier la tâche des attaquants sans complexifier le NN en insérant des réseaux, mais en cherchant cette fois-ci volontairement à ajouter un bruit. En d'autres termes on accepte une légère dégradation de performances qui sécurise le NN en le rendant bien plus robuste que tout ce qui était jusque-là proposé.

Par commodité on nommera « premier réseau de neurones » le NN d'origine à protéger et « deuxième réseau de neurones » le NN modifié et ainsi sécurisé.

Plus en détails, la sécurisation du premier réseau en deuxième réseau consiste à intégrer dans son architecture au moins un réseau de neurones de type auto-encodeur entrainé à ajouter un bruit parasitique à son entrée.

Cet auto-encodeur « bruiteur » ne modifie pas sensiblement le fonctionnement du NN car ses sorties sont proches de ses entrées, notamment en ce qui concerne les composantes basse-fréquence, voir plus loin. Par contre il rend inopérantes les perturbations antagonistes.

On note que l'encodeur ne se contente pas d'approximer son entrée, mais y ajoute expressément un bruit, avantageusement fonction de l'entrée (i.e. l'auto-encodeur est entraîné pour ajouter à son entrée un bruit parasitique fonction de ladite entrée).

Mathématiquement, pour une entrée x, la sortie de l'auto-encodeur est ainsi A(x)≈x+n(x) où n est le bruit parasitique (et x+n(x) est utilisé comme vérité terrain pour l'apprentissage comme l'on verra), alors que la sortie du CNN Identité connu est I(x)≈x (x est utilisé comme vérité terrain pour l'apprentissage).

De manière préférée, le bruit parasitique ajouté par l'auto-encodeur présente une norme d'au moins 0.1% de la norme de l'entrée, i.e. ||n(x)||≥0.0001*||x||.

L'idée d'utiliser un auto-encodeur pour ajouter du bruit est originale et contre-nature, car les auto-encodeurs sont généralement utilisés au contraire pour débruiter leur entrée, on parle d'auto-encodeur « débruiteur ».

Un auto-encodeur, ou « encodeur-décodeur » est un réseau de neurones comprenant deux blocs successifs : un bloc encodeur produisant une carte de caractéristiques de haut-niveau représentative de son entrée, dite « code » de l'entrée (l'encodage peut être vu comme une compression de l'entrée), et un bloc décodeur (habituellement) regénérant l'entrée à partir du code (i.e. on l'entraîne par apprentissage non supervisé dans lequel on prend l'entrée comme vérités-terrain). L'espace du code possède généralement une dimension inférieure à celui de l'espace d'entrée, ainsi l'encodeur peut être vu comme un filtre passe-bas (qui garde les composantes basse fréquence de l'entrée), d'où sa capacité à débruiter l'entrée.

Selon un mode de réalisation possible :
- l'encodeur est composé d'une succession de couches de convolution CONV et de couches d'activation alternées (par exemple ReLU), éventuellement avec des couches de normalisation en batch BN intercalées, en particulier 4 blocs CONV+BN+ReLU montant le nombre de canaux de 3 en entrée (image RGB) à 16, puis 32, puis 32 à nouveau et enfin 64 (le « code ») ;
- le décodeur est composé d'une succession de couches de convolution transposée TCONV et de couches d'activation alternées (par exemple ReLU), éventuellement avec des couches de normalisation en batch BN intercalées, en particulier 4 blocs TCONV+BN+ReLU descendant le nombre de canaux de 64 en entrée (le « code ») à 64 à nouveau, puis 32, 16 et enfin 3 (entrée + bruit parasitique)

Les convolutions peuvent avoir des filtres de taille 3x3.

On note que les auto-encodeurs ont déjà été proposés pour retirer les perturbations antagonistes, puisqu'elles jouent essentiellement sur les composantes haute fréquence.

Les documents (1) *DDSA: a Defense against Adversarial Attacks using Deep Denoising Sparse Autoencoder, Yassine Bakhti, Sid Ahmed Fezza, Wassim Hamidouche, Olivier Déforges, (2) PuVAE: A Variational Autoencoder to Purify Adversarial Examples, Uiwon Hwang1, Jaewoo Park1, Hyemi Jang1, Sungroh Yoon1, Nam Ik Cho,* et (3) *DSCAE: a denoising sparse convolutional autoencoder defense against adversarial examples Hongwei Ye, Xiaozhang Liu, Chun-Liang Li,* proposent par exemple chacun d'utiliser un autoencodeur débruiteur pour filtrer les perturbations antagonistes de sorte « purifier » les données en amont du NN.

L'auto-encodeur est ainsi spécifiquement entraîné pour supprimer la perturbation antagoniste sur des données d'entrée (dans l'apprentissage, on prend comme vérité terrain la donnée d'entrée), ce qui est complexe (il est nécessaire de disposer d'exemples de perturbations antagonistes pour constituer la base d'apprentissage) et qui ne va vraiment marcher que dans les situations connues (perturbations similaires à celles utilisées pour l'apprentissage).

La présente invention fait le contraire : comme expliqué on apprend à l'auto-encodeur à bruiter au lieu de débruiter. En effet, cela va revenir pour l'auto-encodeur à rajouter une composante haute fréquence lors du décodage (en conservant la composante basse fréquence), ce qui va noyer une éventuelle perturbation antagoniste et la rendre inopérante. Pour reformuler, l'auto-encodeur s'avère efficace pour ajouter un bruit qui est efficace contre une perturbation antagoniste, tout en ayant seulement un impact limité sur la sortie du NN puisqu'on conserve les composantes basse fréquence de l'entrée.

Les avantages de cette solution sont multiples :
- l'auto-encodeur peut être entraîné de manière indépendante, et sans avoir à disposer d'exemples de perturbations antagonistes, ce qui le rend efficace pour tout NN contre un large spectre de perturbations tout en étant facile entraîner.
- comme l'on verra plus loin, l'auto-encodeur peut être placé n'importe où dans le NN et on peut même en insérer plusieurs de sorte à créer une « diversité » de parasites, le tout choisi le cas échéant de manière dynamique et aléatoire, ce qui ne laisse plus aucune chance à un attaquant d'arriver à générer une perturbation antagoniste qui fonctionnerait.

### Procédé

Selon un premier aspect, est proposé en référence à la Figure 2 un procédé d'utilisation sécurisée du 2^{e} NN sur une donnée d'entrée, mis en œuvre par les moyens de traitement de données 21 du terminal 2.

Le procédé commence avantageusement par une étape « préparatoire » (a0) d'obtention des paramètres du 1^{e} NN et dudit auto-encodeur, préférentiellement une pluralité d'auto-encodeurs, notamment de diverses architectures, appris sur des bases différentes, etc., de sorte à définir un ensemble si possible varié, on verra cela plus en détail plus loin. A noter qu'il est possible que ledit ensemble contienne, outre le ou les auto-encodeurs, d'autres réseaux de neurones entrainés pour ajouter un bruit parasitique à leur entrée.

Cette étape (a0) peut être une étape d'apprentissage de chacun des réseaux sur une base d'apprentissage dédiée, en particulier du 1^{e} NN, préférentiellement mise en œuvre par les moyens de traitement de données 11 du serveur 1 à cet effet, mais on comprendra que les réseaux (en particulier les auto-encodeurs) pourraient être préexistants et pris en l'état. En tout état de cause, le ou les auto-encodeurs peuvent être appris en particulier sur n'importe quelle base de données publiques, voire même sur des données aléatoires (pas besoin qu'elles soient annotées car on peut reconstruire un bruit à partir de ces données, voir plus loin).

Dans une étape principale (a), on construit ledit 2^{e} NN correspondant au 1^{e} NN dans lequel est inséré au moins un réseau de neurones de type auto-encodeur entrainé pour ajouter un bruit parasitique à son entrée, en particulier un ou plusieurs auto-encodeurs sélectionné(s). En d'autres termes, l'étape (a) est une étape d'insertion du ou des auto-encodeurs dans le 1^{e} NN. S'il y a plusieurs auto-encodeurs sélectionnés, ils peuvent être insérés chacun à la suite, à divers endroits.

A ce titre, l'étape (a) comprend avantageusement la sélection d'un ou plusieurs auto-encodeurs dans ledit ensemble d'auto-encodeurs, par exemple aléatoirement. D'autres « paramètres d'insertion » peuvent être sélectionnés, notamment une position dans le 1^{e} NN (couche cible), voir plus loin. En tout état de cause il reste possible que l'ensemble d'auto-encodeurs n'en contienne qu'un de sorte qu'il n'y a pas besoin de sélection, voire même que l'auto-encodeur soit appris à la volée.

Par insertion, on entend l'ajout des couches de l'auto-encodeur en amont de la couche « cible » du 1^{e} NN de sorte que l'entrée de cette couche soit immédiatement en sortie de l'auto-encodeurs. En d'autres termes, l'auto-encodeur parasite l'entrée de la couche cible pour la remplacer par sa sortie.

La couche cible est préférentiellement une couche linéaire (et pas une couche non-linéaire à fonction d'activation par exemple), de sorte que l'auto-encodeur est inséré en entrée d'une couche linéaire du 1^{e} NN.

La couche cible est préférentiellement une couche à l'intérieur du 1^{e} NN, c'est-à-dire une couche autre que la première (entre la deuxième couche et la dernière). De manière particulièrement préférée, la couche cible est ainsi une couche linéaire à l'intérieur du 1^{e} NN.

L'étape (a) peut également comprendre comme expliqué la sélection de la couche cible.

Cette sélection peut à nouveau être faite au hasard et dynamiquement, i.e. on tire des nouvelles couches cibles à chaque nouvelle requête d'utilisation du 1^{e} NN, mais également selon une séquence, ou bien en fonction de données contextuelles, et notamment de la donnée d'entrée. La présente invention ne sera limitée à aucune façon de sélectionner en particulier la couche cible/le ou auto-encodeurs, tant qu'il y a un choix actif parmi plusieurs possibilités de sorte à rajouter de l'entropie pour complexifier toujours plus la tâche pour un éventuel attaquant.

En pratique la sélection peut être faite selon le protocole suivant (chaque étape étant optionnelle - chaque choix peut être aléatoire ou prédéterminé) :
1. on choisit un nombre d'auto-encodeurs à insérer ;
2. on tire autant d'auto-encodeurs que ce nombre dans l'ensemble des auto-encodeurs (avec ou sans remise) ;
3. pour chaque auto-encodeur tiré on choisit une couche cible à affecter (i.e. en entrée de laquelle l'auto-encodeur sera inséré) parmi les couches (en particulier linéaires et/ou à l'intérieur) du 1^{e} NN ;

En ce qui concerne le point 3., il est à noter que deux auto-encodeurs peuvent être choisis comme affectant la même couche cible : ils sont disposés à la suite.

A noter enfin que les actions de sélection et de construction peuvent être partiellement imbriquées (et donc mise en œuvre en même temps) : s'il y a plusieurs auto-encodeurs à insérer, on peut déterminer les paramètres d'insertion pour le premier, l'insérer, déterminer les paramètres d'insertion du deuxième, l'insérer, etc. De plus, comme expliqué la sélection de la couche cible peut être faite à la volée dans l'étape (a).

A l'issue de l'étape (a) on suppose que le 2^{e} NN est construit. Alors, dans une étape (b) ce 2^{e} NN peut être utilisé sur ladite donnée d'entrée, i.e. on applique le 2^{e} NN à la donnée d'entrée et on obtient une donnée de sortie qui peut être fournie à l'utilisateur du terminal 2 sans aucun risque de pouvoir remonter au 1^{e} NN.

L'idée d'avoir des sélections dynamiques est que l'attaquant ne puisse pas s'adapter. A noter qu'alternativement ou en complément, on peut aussi construire plusieurs 2^{e} NN (avec des sélections différentes) et consolider leurs réponses (données de sorties) pour disposer d'un « méta réseau » encore plus robuste.

### Apprentissage de l'auto-encodeur

Comme expliqué, le procédé commence avantageusement par une étape (a0) d'obtention des paramètres du 1^{e} NN et d'au moins un auto-encodeur. En d'autres termes, durant l'étape (a0) l'auto-encodeur est entraîné à ajouter un bruit parasitique à son entrée, i.e. à générer comme sortie A(x) la somme de son entrée x et du bruit parasitique n(x).

On pourra procéder de nombreuses façons.

Selon un premier mode, on peut tout simplement partir directement d'une base existante en l'état de données d'apprentissage qui sont des couples d'une donnée d'entrée « de référence » et de sa version bruitée égale à la somme de la donnée de référence et d'un bruit parasitique (i.e. {x, x'}, où x' peut être décomposée comme x+n).

Selon un deuxième mode préféré, on génère des couples en calculant, pour une donnée de référence x, un bruit parasitique possible n(x) pour cette donnée de manière algorithmique. Par exemple n(x) peut être un bruit Gaussien centré par exemple avec une déviation standard de 0.01 ou 0.05 minimum pour CIFAR10 (notamment si les perturbations antagonistes sont calculés sur la norme L²). Une autre possibilité, dans le cadre de la norme L^{∞}, est de considérer du bruit « poivre et sel » (et donc d'ajouter des points noirs et blancs si la donnée d'entrée est une image).

Pour ce faire, on utilise un générateur de nombres pseudo-aléatoires (en particulier avec une densité de probabilité uniforme), à partir desquels on peut calculer un bruit vérifiant la distribution souhaitée, en particulier gaussienne, par une méthode d'échantillonnage adéquate (par exemple la méthode de la transformée inverse ou la méthode ziggourat). On appelle « graine » (en anglais seed) le nombre-pseudo aléatoire à partir duquel le bruit est généré.

De manière particulièrement avantageuse, pour que le bruit dépende de l'entrée, on utilise une empreinte cryptographique (haché) de x avec une fonction de hachage donnée comme graine pour la génération de bruit, i.e. n(x)=f(hash(x)) avec f une transformation adéquate pour passer d'une distribution uniforme à une distribution cible. En effet par définition d'une fonction de hachage, sa sortie peut être vue comme une variable aléatoire de distribution uniforme.

Alors, ledit bruit parasitique possible pour une donnée de référence est entièrement déterminé par une empreinte cryptographique de ladite donnée de référence pour une fonction de hachage donnée.

On peut donc ainsi, partant d'une pluralité de données de référence {xi} (qu'on peut même prendre aléatoirement), calculer pour chacune A(xᵢ)=xᵢ+n(xᵢ), de sorte à obtenir la base d'apprentissage {xᵢ, A(xᵢ)}, et entraîner l'auto-encodeur à prédire A(xᵢ) à partir de xᵢ.

### Produit programme d'ordinateur

Selon un deuxième et un troisième aspects, l'invention concerne un produit programme d'ordinateur comprenant des instructions de code pour l'exécution (en particulier sur les moyens de traitement de données 11, 21 du serveur 1 ou du terminal 2) d'un procédé selon le premier aspect de l'invention d'utilisation sécurisée d'un premier réseau de neurones sur une donnée d'entrée, ainsi que des moyens de stockage lisibles par un équipement informatique (une mémoire 12, 22 du serveur 1 ou du terminal 2) sur lequel on trouve ce produit programme d'ordinateur.

## Revendications

1. Procédé d'utilisation sécurisée d'un premier réseau de neurones sur une donnée d'entrée, le procédé étant **caractérisé en ce qu'**il comprend la mise en œuvre par des moyens de traitement de données (21) d'un terminal (2) d'étapes de :
(a) construction d'un deuxième réseau de neurones correspondant au premier réseau de neurones dans lequel est inséré en entrée d'une couche cible du premier réseau de neurones au moins un réseau de neurones de type auto-encodeur entrainé pour ajouter un bruit parasitique à son entrée au moyen d'un bloc de décodage de l'auto-encodeur rajoutant une composante haute fréquence, ledit bruit parasitique ajouté à son entrée par l'auto-encodeur étant fonction de ladite entrée;
(b) utilisation du deuxième réseau de neurones sur ladite donnée d'entrée ;
et comprenant une étape (a0) préalable d'obtention des paramètres dudit auto-encodeur et du premier réseau de neurones ;
et dans lequel pour une base d'apprentissage de couples d'une donnée de référence et d'une version bruitée de la donnée de référence égale à la somme de la donnée de référence et d'un bruit parasitique possible, l'auto-encodeur étant entraîné à prédire ladite version bruitée d'une donnée de référence à partir de la donnée de référence correspondante.

2. Procédé selon la revendications 1, dans lequel ladite couche cible est à l'intérieur du premier réseau du neurones.

3. Procédé selon l'une des revendications 1 à 2, dans lequel l'étape (a) comprend la sélection de ladite couche cible du premier réseau de neurones parmi les couches dudit premier réseau de neurones

4. Procédé selon l'une quelconque des revendications 1 à 3, dans lequel l'étape (a0) comprend, pour chacune d'une pluralité de données de référence, le calcul du bruit parasitique possible pour ladite donnée de référence en fonction de la donnée de référence, de sorte à constituer ladite base d'apprentissage.

5. Procédé selon la revendication 4, ledit bruit parasitique possible pour la donnée de référence est entièrement déterminé par une empreinte cryptographique de ladite donnée de référence pour une fonction de hachage donnée.

6. Procédé selon l'une des revendications 1 à 5, dans lequel l'étape (a0) comprend l'obtention des paramètres d'un ensemble de réseau de neurones de type auto-encodeur entrainés pour ajouter un bruit parasitique à leur entrée, l'étape (a) comprenant la sélection dans ledit ensemble d'au moins un auto-encodeur à insérer.

7. Procédé selon la revendication 6, dans lequel l'étape (a) comprend en outre la sélection préalable d'un nombre d'auto-encodeurs dudit ensemble à sélectionner.

8. Procédé selon l'une des revendications 1 à 7, dans lequel l'étape (a0) est une étape mise en œuvre par des moyens de traitement de données (11) d'un serveur (1) d'apprentissage.

9. Produit programme d'ordinateur comprenant des instructions de code qui conduisent un ordinateur à mettre en œuvre le procédé selon l'une des revendications 1 à 8 d'utilisation sécurisée d'un premier réseau de neurones sur une donnée d'entrée, lorsque ledit programme est exécuté par ledit ordinateur.

10. Moven de stockage lisible par un équipement informatique sur lequel un produit programme d'ordinateur comprend des instructions de code qui, lorsqu'elles sont exécutes par un ordinateur, conduisent ledit ordinateur à mettre en œuvre le procédé selon l'une des revendications 1 à 8 d'utilisation sécurisée d'un premier réseau de neurones sur une donnée d'entrée.

## Patentansprüche

1. Verfahren zur sicheren Verwendung eines ersten neuronalen Netzes für Eingabedaten, wobei das Verfahren **dadurch gekennzeichnet ist, dass** es die Durchführung folgender Schritte durch Datenverarbeitungsmittel (21) eines Endgeräts (2) umfasst:
(a) Aufbau eines zweiten neuronalen Netzes, das dem ersten neuronalen Netz entspricht, in das am Eingang einer Zielschicht des ersten neuronalen Netzes mindestens ein neuronales Netz vom Typ Autoencoder eingefügt ist, das so trainiert ist, dass es seinem Eingang mittels eines Decodierblocks des Autoencoders, der eine Hochfrequenzkomponente hinzufügt, ein Störrauschen hinzufügt, wobei das durch den Autoencoder an seinem Eingang hinzugefügte Störrauschen eine Funktion des Eingangs ist
(b) Verwendung des zweiten neuronalen Netzwerks auf den Eingangsdaten;
und mit einem vorhergehenden Schritt (a0) zum Erhalten der Parameter des Autoencoders und des ersten neuronalen Netzwerks;
wobei für eine Lernbasis aus Paaren aus einem Referenzdatenwert und einer verrauschten Version des Referenzdatenwerts, die der Summe aus dem Referenzdatenwert und einem möglichen Störgeräusch entspricht, der Autoencoder darauf trainiert wird, die verrauschte Version eines Referenzdatenwerts anhand des entsprechenden Referenzdatenwerts vorherzusagen.

2. Verfahren nach Anspruch 1, wobei sich die Zielschicht innerhalb des ersten neuronalen Netzwerks befindet.

3. Verfahren nach einem der Ansprüche 1 bis 2, wobei der Schritt (a) das Auswählen der Zielschicht des ersten neuronalen Netzwerks aus den Schichten des ersten neuronalen Netzwerks umfasst.

4. Verfahren nach einem der Ansprüche 1 bis 3, wobei der Schritt (a0) für jede einer Vielzahl von Referenz daten die Berechnung des möglichen Störrauschens für die Referenz in Abhängigkeit von der Referenz umfasst, um die Lernbasis zu bilden.

5. Verfahren nach Anspruch 4, wobei das mögliche Störrauschen für die Referenzdaten vollständig durch einen kryptografischen Fingerabdruck der Referenzdaten für eine bestimmte Hash-Funktion bestimmt wird.

6. Verfahren nach einem der Ansprüche 1 bis 5, wobei der Schritt (a0) das Erhalten der Parameter einer Gruppe von neuronalen Netzen vom Typ Autoencoder umfasst, die darauf trainiert sind, ihrem Eingang parasitäres Rauschen hinzuzufügen, wobei der Schritt (a) das Auswählen mindestens eines einzufügenden Autoencoders aus der Gruppe umfasst.

7. Verfahren nach Anspruch 6, wobei der Schritt (a) außerdem die vorherige Auswahl einer Anzahl von Autoencodern aus dem zu wählenden Satz umfasst.

8. Verfahren nach einem der Ansprüche 1 bis 7, wobei der Schritt (a0) ein Schritt ist, der durch Datenverarbeitungsmittel (11) eines Lernservers (1) ausgeführt wird.

9. Computerprogrammprodukt, das Codebefehle umfasst, die einen Computer veranlassen, ein Verfahren gemäß einem der Ansprüche 1 bis 8 zur sicheren Verwendung eines ersten neuronalen Netzwerks auf Eingabedaten durchzuführen, wenn das Programm von dem Computer ausgeführt wird.

10. Von einer Computervorrichtung lesbares Speichermedium, auf dem ein Computerprogrammprodukt Codeanweisungen enthält, die, wenn sie von einem Computer ausgeführt werden, den Computer veranlassen, das Verfahren gemäß einem der Ansprüche 1 bis 8 zur sicheren Verwendung eines ersten neuronalen Netzwerks auf Eingabedaten auszuführen.

## Claims

1. Method for the secure use of a first neural network on input data, the method being **characterised in that** it comprises the implementation by data processing means (21) of a terminal (2) of the following steps:
(a) constructing a second neural network corresponding to the first neural network in which at least one self-encoding neural network trained to add parasitic noise to its input by means of a decoding block of the self-encoder adding a high-frequency component is inserted at the input of a target layer of the first neural network, said parasitic noise added to its input by the autoencoder is a function of said input.
(b) using the second neural network on said input data;
and comprising a preliminary step (a0) of obtaining the parameters of said autoencoder and of the first neural network;
wherein, for a training set of pairs of reference data and a noisy version of the reference data equal to the sum of the reference data and possible parasitic noise, the autoencoder is trained to predict said noisy version of a reference data from the corresponding reference data.

2. Method according to claim 1, wherein said target layer is within the first neural network.

3. Method according to one of claims 1 to 2, wherein step (a) comprises selecting said target layer of the first neural network from among the layers of said first neural network.

4. Method according to any of claims 1 to 3, wherein step (a0) comprises, for each of a plurality of reference data, calculating the possible noise for said reference data based on the reference data, so as to constitute said learning base.

5. Method according to claim 4, wherein the possible parasitic noise for the reference data is entirely determined by a cryptographic fingerprint of the reference data for a given hash function.

6. Method according to one of claims 1 to 5, wherein step (a0) comprises obtaining the parameters of a set of autoencoder-type neural networks trained to add parasitic noise to their input, step (a) comprising selecting from said set at least one autoencoder to be inserted.

7. Method according to claim 6, wherein step (a) further comprises the prior selection of a number of autoencoders from said set to be selected.

8. Method according to one of claims 1 to 7, wherein step (a0) is a step implemented by data processing means (11) of a learning server (1).

9. Computer program product comprising code instructions that cause a computer to implement a method according to one of claims 1 to 8 for secure use of a first neural network on input data, when said program is executed by said computer.

10. A computer-readable storage medium on which a computer program product comprises code instructions which, when executed by a computer, cause said computer to implement the method according to one of claims 1 to 8 for secure use of a first neural network on input data.
